# EUROPEAN PATENT APPLICATION

(11) **EP 2 274 975 A2**
(43) Date of publication of application: **19.01.2011**
(21) Application number: 10169175.6
(22) Date of filing: 09.07.2010
(51) Int. Cl.: A01K 1/01

(54) **Scoop device for separating manure from bedding**

(30) Priority: 15.07.2009 US 503542
(71) Applicant: Riccardi, Daniel Edward, Siller City, NC 27344 (US)
(72) Inventor: Riccardi, Daniel Edward, Siller City, NC 27344 (US)
(74) Representative: Johnson, Yvonne Catherine

(57) **Abstract**

The present invention is directed to a device (01) useful for separating manure from bedding material when mucking an animal's stall. The device has a handle (03) and a scoop (05). The scoop has a blade and multiple holes (21) which allow bedding material, such as wood chips, to fall through but which is small enough to retain manure clumps in the scoop. A method of use of the device is also taught.

## Description

### COPYRIGHT NOTICE

A portion of the disclosure of this patent contains material that is subject to copyright protection. The copyright owner has no objection to the reproduction by anyone of the patent document or the patent disclosure as it appears in the Patent and Trademark Office patent files or records, but otherwise reserves all copyright rights whatsoever.

### BACKGROUND OF THE INVENTION

### Field of the Invention

The present invention relates to a device for separation of recyclable bedding material from manure on the floor of an animal's stall such as a horse's stall.

### Description of Related Art

The problem of removing manure from the stables, stalls, and bedding areas of an animal, a task commonly known as "mucking," in an efficient manner goes back to ancient times. Hercules, according to myth, was given the job of cleaning the stables of the gods. He accomplished his mission by diverting a river to flush away the manure. Through the ages, mere mortals lacking the power of Hercules have resorted to rakes and shovels to carry out the unpleasant but essential task of mucking.

Typically, the floor of an animal bedding area, such as a horse's stall, is covered with a layer of inexpensive, absorptive material such as wood shavings, saw dust, sand and the like. While straw is occasionally used as a bedding material, it has a disposal problem and smaller finer materials are the usual bedding material of choice. The problem associated with mucking is to efficiently remove the manure and leave behind the bedding material. The patent literature teaches numerous devices to facilitate mucking. For example, U.S. patent 226,351 that issued in 1880 claims a shovel like device constructed of heavy wire. U.S. 5,417,044 describes a rake and basket combination. U.S. design patent Des 406,413 presents a specialized mucking rake, and U.S. 7,044,520 teaches a motor powered basket type scoop. Even with the plethora of mucking devices in the art, there is still a need to more rapidly and more efficiently separate manure from bedding.

### BRIEF SUMMARY OF THE INVENTION

The first aspect of the present invention is a hand operated device for separating manure from bedding material, especially for smaller bedding material such as shavings, wood chips and sand. The device has a handle and a scoop. The scoop, with a longitudinal axis, a transverse axis, and an edge around its perimeter, has:
a) a proximal partially concave top section and corresponding partially convex bottom section with a handle socket merging into the partially concave top section wherein the handle is affixed to the scoop along the longitudinal axis;
b) a substantially flat upper section and corresponding lower section distal to the socket and terminating at a substantially straight, firm section of the edge having a plurality of teeth;
c) optionally one or more ribs extending from the vicinity of the socket, from the partially concave upper section, across the flat upper section to the vicinity of the edge forming two or more channels; and
d) a plurality of holes, in areas not occupied by the ribs or in close proximity to the edge.

The second aspect is a method of separating manure from bedding material by:
a) moving the device of the first aspect by the handle to force the scoop under a pile of manure mixed with bedding material to fill the scoop with the manure and the concomitant bedding material clinging to the manure;
b) raising the device above the bedding material with the flat section of the scoop substantially parallel to the bedding material; and
c) vibrating the device to cause particles of bedding material to pass through the holes leaving the manure in the scoop.

The device of the present invention is easy to operate and easy to clean. Its scoop featuring a partial flat bottom and blade may rapidly be pushed around an animal's stall to collect manure.

### BRIEF DESCRIPTION OF THE DRAWINGS

Figure 1 is a top view of the device showing the handle and scoop.

Figure 2a shows the top view of the scoop.

Figure 2b shows the bottom of the scoop.

Figure 3 is a perspective view of the scoop and handle socket.

### DETAILED DESCRIPTION OF THE INVENTION

While this invention is susceptible to embodiment in many different forms, herein will be described certain specific embodiments, with the understanding that the present disclosure of such embodiments is to be considered as an example of the principles and not intended to limit the invention to the specific embodiments shown and described. In the description below, like reference numerals are used to describe the same, similar or corresponding parts in the several views of the drawings. This detailed description defines the meaning of the terms used herein and specifically describes embodiments in order for those skilled in the art to practice the invention.

The terms "a" or "an", as used herein, are defined as one, or more than one. The term "plurality", as used herein, is defined as two or more. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically.

Reference throughout this document to "one embodiment", "certain embodiments", and "an embodiment" or similar terms means that a particular feature, structure, or characteristic described in connection with the embodiment is included in at least one embodiment of the present invention. Thus, the appearances of such phrases or in various places throughout this specification are not necessarily all referring to the same embodiment. Furthermore, the particular features, structures, or characteristics may be combined in any suitable manner in one or more embodiments without limitation.

The term "or" as used herein is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

In the curved section of the scoop the top section, that is partially concave, is proximal to the handle socket. The handle socket merges into the partially concave upper section, in other words it extends from the partially concave upper section. The partially convex bottom section may extend from the partially concave top section. The partially concave top section may be located between the handle socket and the partially convex bottom section. The handle socket allows the handle to be attached to the scoop along the longitudinal axis of the scoop.

In the substantially flat section of the scoop it will be appreciated that a small degree of curvature may be permitted (i.e. this section need not lie entirely in a single plane) but this section must be substantially flat. Preferably there is a degree of curvature of 10 degrees or less, 9 degrees or less, 8 degrees or less, 7 degrees or less, 6 degrees or less, 5 degrees or less, 4 degrees or less, 3 degrees or less, 2 degrees or less, or 1 degree or less. The substantially flat upper section may extend from the curved section, in particular from the partially convex bottom section. The substantially flat lower section may extend from the substantially flat upper section. The substantially flat upper section is distal to the handle socket and thus provides the section of the scoop that this furthest from the handle. This lower section terminates at a substantially straight section of the edge, which forms a blade. It will be appreciated that this section of the edge that forms the blade may include some degree of curvature but must be substantially straight. Preferably there is a degree of curvature of 10 degrees or less, 9 degrees or less, 8 degrees or less, 7 degrees or less, 6 degrees or less, 5 degrees or less, 4 degrees or less, 3 degrees or less, 2 degrees or less, or 1 degree or less. The blade may bear a plurality of teeth. As these teeth are provided on the substantially straight section of the edge that forms the blade, it will be appreciated that any such teeth will be presented in a substantially straight line.

It may be that one or more ribs are provided in the scoop. These may extend from the vicinity of the handle socket, in other words the ribs may start from a position on the scoop that is at or near the handle socket (e.g. within 50mm or less of the handle socket, such as 40mm or less, 30mm or less, 20mm or less, or 10mm or less). The ribs therefore start from a position within the partially concave top section; preferably from a position within the top 50% of the partially concave top section, such as the top 40%, top 30%, top 20% or top 10%. The ribs extend across the substantially flat upper section. The ribs continue to extend to the vicinity of the edge of the scoop, in other words the ribs may terminate at or near to the edge of the scoop (e.g. within 20mm or less of the edge, such as 10mm or less).. The ribs may terminate at a position in the substantially flat lower section; preferably at a position within the bottom 50% of the substantially flat lower section, such as the bottom 40%, bottom 30%, bottom 20% or bottom 10%.

In the scoop a plurality of holes are provided. These holes are provided in areas that are not occupied by any optional ribs. Further, these holes are not in close proximity to the edge or blade. In other words, these holes are not provided at or near the edge or blade. Preferably these holes are provided at locations that are 1 mm or more from the edge and from the blade, such as 2mm or more, 3mm or more, 4mm or more, or 5mm or more; in one embodiment these holes are provided at locations that are 10mm or more from the edge or the blade, such as 15mm or more, or 20 mm or more. The holes, may, for example, have a maximum dimension (e.g. diameter) of from 80mm or less (e.g. from 10 to 80mm), 70mm or less (e.g. from 15mm to 70mm), or 60mm or less (e.g. from 20mm to 60mm).

In one embodiment the handle socket extends into the upper concave and flat sections of the scoop, along the longitudinal axis, to form a major rib that merges with the flat section in the proximity of the distal, substantially straight edge that forms a blade. In this regard, the merging with the flat section involves the major rib becoming flat rather than raised, such that it becomes part of the flat section. Thus the major rib may be viewed as terminating at this point. This flattening or termination of the major rib occurs in the proximity of the distal, substantially straight edge that forms a blade, in other words it is at or near the blade. It may, for example, be within 100mm or less of the blade, such as 75mm or less, 50mm or less, 40mm or less, 30mm or less, 20mm or less, 10mm or less.

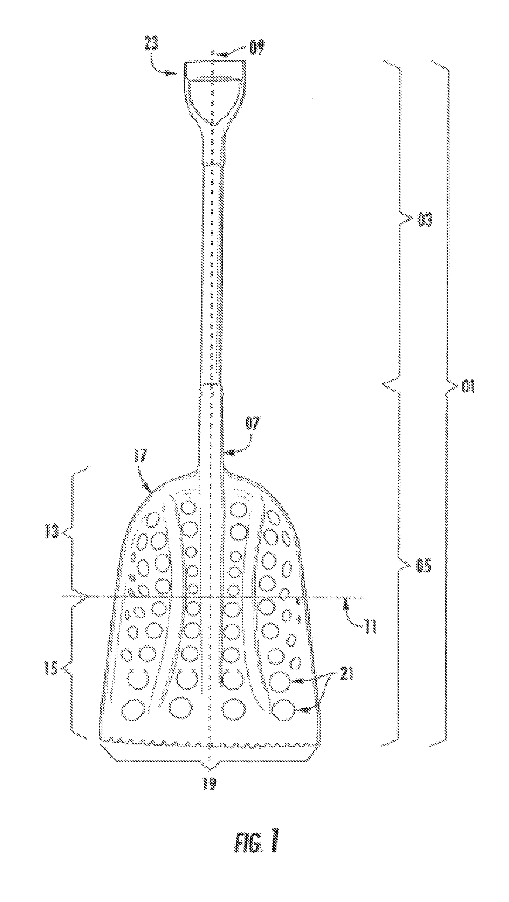

Figure 1 illustrates the device **01** as viewed from its top showing handle **03** and scoop **05** wherein the handle is attached to the scoop by means of handle socket **07.** Device **01** has a longitudinal axis **09** (depicted by a dashed line extending along handle **03** trough the middle of scoop **05),** and a traverse axis **11** (depicted by a dash-dot-dash line) that separates the scoop's curved section **13** (proximal to handle **03)** from the scoop's substantially flat section **15** distal to the handle. Scoop **05** has an edge **17** that extends around the scoop's perimeter and separates the top of the scoop from its bottom section. The part of edge **17** that is distal to the handle is substantially straight and is substantially parallel to traverse axis **11** to forms blade **19.** Scoop **05** has a plurality of holes (collectively, "holes **21,"** two of which are labeled in Figure 1) extending from handle socket **07** to blade **19.**

The handle is a convenient length typical of mucking devices of the art. Typically, it is about 0.5 m to about 1.5 m. Optionally, the handle may be fitted with a grip such as a "D" shaped grip **23** as shown in the embodiment illustrated in Figure 1.

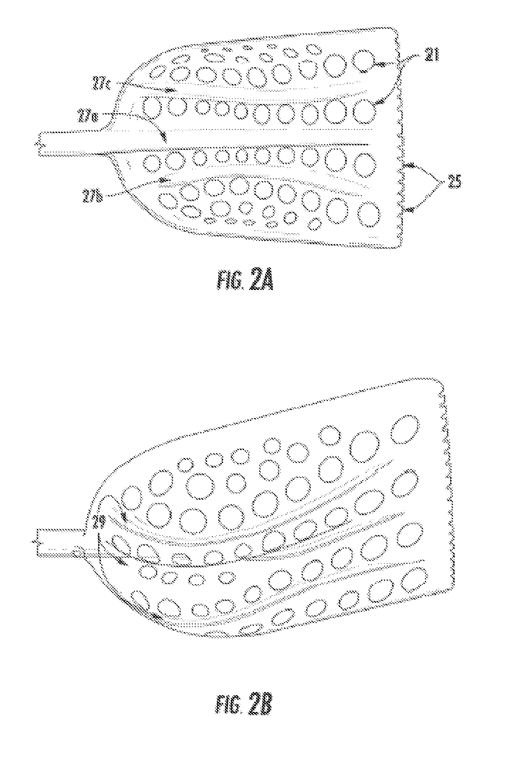

Figure 2a provides a detailed illustration of the top of scoop **05** while Figure 2b provides a corresponding illustration of its bottom. These two figures are conveniently viewed together. Blade **19** may be sharp, semi sharp, or blunt, also, according to the embodiment illustrated in Figures 1 - 3, it may have a plurality of teeth **25.** Optionally, scoop **05** may have one or more ribs **27** as shown in the figures (three such ribs are depicted in the specific embodiment shown in the figures). Conveniently, Scoop **05** has a major rib **27a** along its longitudinal axis, starting as an extension of handle socket **07** and merging into flat section **15** in the vicinity of blade **19,** and two minor ribs **27b** and **27c** symmetrically positioned with respect to major rib **27a** as depicted in the specific embodiment shown in the figures. As viewed from the bottom of scoop **05** (Figure 2b) ribs **27** may have a corresponding recessed areas **29.** Alternatively, the bottom of scoop **05** may be smooth or bear a separate set of ribs corresponding to ribs **27.**

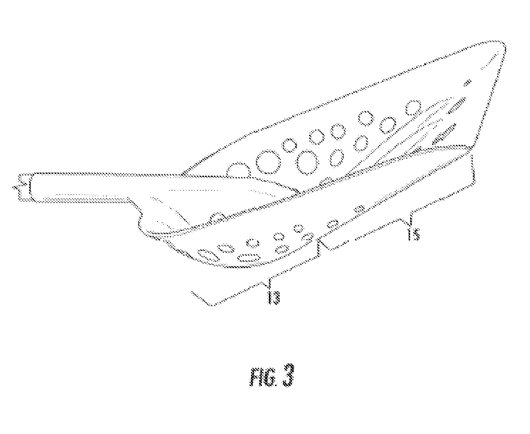

Figure 3, a perspective view of scoop **05,** is present to more completely illustrate the spatial relationship of the features of the specific embodiment illustrated in the other figures. Further, Figure 3 shows how the curved section **13** morphs into flat section **15,** which in turn, terminates as blade **19.**

Ribs **27** serve to maintain the structural integrity of scoop **05** as well as channeling material across holes **21.** Conveniently, ribs **27** are formed as part of the molding or stamping process by which scoop **05** is manufactured.

Holes **21** may be of the same or different sizes, and they may be various geometric shapes other than thin, elongated slits, but, conveniently, holes **21** are rounded shapes such as circles, ovals, or ellipses. By having a plurality of different sized holes, bedding of various sizes or that clump together can both be separated from manure with the present invention mucking tool. In general, one choosing the holes will size them to allow the smaller bedding material to pass through the mucking tool while allowing the manure to remain in the tool. One skilled in the art in view of this disclosure would readily understand how to match a series of various sized holes to match the particular bedding. In one embodiment the holes are matched to the particular bedding. Holes for sand, holes for wood shavings etcetera could be on a tool alone or in combination to provide a tool for use with various sized bedding material. The present device, therefore, is not as efficient with larger bedding material, such as straw, since large straw will not easily pass through holes designed for smaller bedding. However, since the majority of horse owners do not use straw, this is of little concern for most users of the present invention mucking tool. The manure separating devices of the art have grids of parallel rods or course screens that tend to get clogged. The present device with its larger holes avoids the clogging problem. The sizes of the holes are small enough to restrict passage of clumps of manure, but freely allow the passage of the bedding material. For example, if holes **21** are circular, their diameters might range from about 20 mm to about 60 mm. Conveniently, holes **21** are largest in the vicinity of blade 19 diminishing toward handle socket **07.**

In the embodiment shown in the figures, holes **21** are symmetrically distributed with respect to the longitudinal axis of the scoop. However, for some applications it may be desirable to have an asymmetric distribution of holes **21.** For example, the holes on one side (with respect to the longitudinal axis) of the scoop may be larger than those on the other side to allow large size manure clumps to be rapidly removed while the sides having the small holes would be used for small clumps. Therefore, the operator of the present device could adjust the device to different size clumps typically encountered in an animal bedding area.

Device **01** may be fabricated of material used in the art for shovels, rakes, and similar hand tools used to clean animal stalls. For example, handle **03** may be made of wood, metal, polymeric materials, or a combination thereof. Likewise, scoop **05** may be made of metal, *e.g*., aluminum, optionally covered with an anti-stick polymer such as tetrafluropolyethylene, or it may be made of a polymeric material such as a polyamide, polyester, polyvinyl, and the like. Further, device **01** may be fabricated by processes well know in the art for manufacturing such tools. Conveniently, scoop **05** may be stamped using high pressure and optionally heat from a sheet of metal or polymeric material.

Device **01** is employed in a similar manner as mucking devices of the art. That is, scoop **05** is pushed under a clump of manure sitting on bedding material in the floor of an animal's bedding area, *e.g*. a horse's stall, and then lifted by handle **03** above the level of the floor with the flat section of scoop **05** substantially parallel to the bedding material. The device is then vibrated vigorously by hand to cause the loose particles of bedding material, such as wood shavings, to fall through holes **21** to the stall floor. The manure remaining in scoop **05** is discarded and the process is repeated.

## Claims

1. A hand operated device (01) for separating manure from bedding material, the device comprising:
a) a handle (03), and
b) a scoop (05) with a longitudinal axis (09), a transverse axis (11), and an edge (17) around its perimeter, the scoop having
i. a curved section (13) which has a proximal top section that is partially concave and a corresponding bottom section that is partially convex, and wherein a handle socket (07) is provided that merges into the partially concave top section, and wherein the handle (03) is affixed to the scoop (05) via the handle socket (07) along the longitudinal axis (09);
ii. a substantially flat section (15) which has a substantially flat upper section and corresponding substantially flat lower section, wherein the lower section is distal to the handle socket (07) and wherein the lower section terminates at a substantially straight section of the edge (17) that forms a blade (19);
iii. optionally, one or more ribs (27) extending from the vicinity of the handle socket (07), wherein the one or more ribs (27) extend from the partially concave upper section, across the flat upper section and to the vicinity of the edge (17), and wherein the one or more ribs form two or more channels; and
iv. a plurality of holes (21), wherein the plurality of holes (21) are provided in areas that are not occupied by the optional ribs (27) and are not in close proximity to the edge (17) or blade (19).

2. The device of Claim 1, which is composed of wood, metal, a polymeric material, or a combination thereof.

3. The device of Claim 2 wherein the handle is composed of wood and the scoop is composed of a polymeric material.

4. The device of any one of Claims 1, 2 or 3 wherein the scoop has a non-stick surface.

5. The device of any one of Claims 1 to 4 wherein the holes (21) are substantially rounded.

6. The device of Claim 5 wherein the holes (21) are substantially circular.

7. The device of any one of Claims 1 to 6 wherein the holes (21) are of a plurality of sizes.

8. The device of any one of Claims 1 to 7 wherein the handle socket (07) extends into the upper concave and flat sections of the scoop (05), along the longitudinal axis (09), to form a major rib (27a) that merges with the flat section (15) in the proximity of the distal, substantially straight edge (17) that forms a blade (19).

9. The device of Claim 8 wherein the scoop has two additional ribs (27b, c) symmetrically situated on each side of the major rib (27a).

10. The device of any one of Claims 1 to 9 wherein the handle terminates in a "D" shaped grip (23) distal to the end of the handle (03) that is affixed to the handle socket (07).

11. The device of any one of Claims 1 to 10 wherein the blade (19) bears a plurality of teeth (25).

12. A method of separating manure from bedding material, the method comprising:
a) moving the device (01) of any one of Claims 1 to 11 by the handle (03) to force the scoop (05) under a pile of manure mixed with bedding material of an animal's stall, to fill the scoop (05) with the manure and with the concomitant bedding material clinging to the manure,
b) raising the device (01) above the bedding material with the flat section (15) of the scoop (05) above the level of the bedding material, and
c) vibrating the device (01) to cause bedding material to pass through the holes (21), leaving the manure in the scoop (05).

13. The method of Claim 12 wherein step a) the device (01) is raised so that the flat section (15) is substantially parallel to the level of the bedding material.

14. The method of Claim 12 or 13 wherein the bedding material is particulate.

15. The method of Claim 14, wherein the bedding material is selected from the group consisting of wood shavings, wood chips and sand.
